# EUROPEAN PATENT SPECIFICATION

(11) **EP 4 176 725 B1**
(45) Date of publication and mention of the grant of the patent: **17.06.2026**
(21) Application number: 22205518.8
(22) Date of filing: 04.11.2022
(51) Int. Cl.: A23B 4/052

(54) **DEVICE AND METHOD FOR AIR SMOKING OF FOOD**
VORRICHTUNG UND VERFAHREN ZUM RÄUCHERN VON LEBENSMITTELN
DISPOSITIF ET MÉTHODE DE FUMAGE D'ALIMENTS

(30) Priority: 04.11.2021 PL 43942321
(43) Date of publication of application: 10.05.2023
(73) Proprietor: Tyszkiewicz, Stanislaw, 00-801 Warsaw (PL)
(72) Inventor: Tyszkiewicz, Stanislaw, 00-801 Warsaw (PL)
(74) Representative: Kondrat, Mariusz

(56) References cited:
- DE-A1- 102018 214 879
- DE-A1- 3 637 892
- FR-A1- 2 841 437

## Description

The subject of the invention is a device for air smoking of food products and a method of air smoking.

Basically, two types of smoking can be distinguished:
- classic air smoking, in which the smoke is produced in a traditional way by burning wood and sawdust with incomplete oxygen access directly in a smoking chamber or smoke generators, from which it is then forced into the smoking chamber by means of fans or sucked in the natural process of hot gas convection;
- smoking of products with smoke preparations (SP), industrially produced under specific conditions away from a smokehouse and intended for use in the form of solutions for bathing, spraying or using an aerosol imitating natural smoke.

The main purpose of smoking is to increase the durability of products and provide them with a specific taste, smell and appearance.

The main reason for the introduction of smoke preparations into the practice of smoking food was the possibility of minimising the carcinogenic components of natural smoke, products of pyrolysis of biological material, in smoked food. These components are polycyclic aromatic hydrocarbons (PAHs). They are relatively easy to eliminate during the industrial processing of smoke concentrates.

Nevertheless, classic air smoking using natural, unstable smoke produced in the vicinity of the smoked products is still used in the processing of raw materials of animal origin and products of plant origin.

The most typical smoked product on the market includes lunch meat, most often found in the form of sausages and smoked parts of carcasses of slaughter animals.

In the 1980s and 1990s, at the Institute of Agricultural and Food Biotechnology, basic research on mass and heat transfer in the process of air smoking of meat products was conducted. As part of the study, a model of a smokehouse with a closed smoke circuit was built and various variants of hot and cold smoking of smoked meats and sausages were investigated. A typical process of smoking ordinary pork sausages included the following steps: cutting the meat into pieces with sides of approximately 3 cm, preparing a curing mixture, mixing it with the meat and leaving it in a cool room for 24 hours. Lean meat of class I, grind in a grinder, using a grid with holes with a diameter of 2-3 mm. Cut the rest of the meat and fat into small cubes. Transfer the meat (all types) to a bowl with a capacity of approx. 15 l, add crushed spices and garlic rubbed with salt. Mix and knead the stuffing until a clear stickiness is achieved. At the end, add the crushed pork fat and mix thoroughly. Fill the casings tightly, forming bars 35-40 cm long. Tie the ends of the bars with yarn or fasten with wooden pins. Leave sausages to hang for 24 hours. Depending on the smoking conditions, a non-durable, semi-durable and durable plain sausage can be obtained. Non-durable sausages are smoked with hot smoke for approximately 3 hours until they turn brown, and then heated in water at 80-90°C for 30-40 minutes until the temperature inside the bar reaches approximately 70°C. After 15 minutes of cooling in cold water, further cooling is performed in the air, preferably in hanging position. Semi-durable plain sausage should be smoked in cold smoke for 6 days (for the first 2 days without a break, and in the remaining period for 2 hours three times a day), and then stored hanging in an airy and cool room. Durable plain sausage is smoked in cold smoke for 14 days with two one-day breaks, and then additionally dried in a cool, airy room. In addition, the result of the research was the development of knowledge on the kinetics of smoke generation and its distribution and the formation of the concept concerning a modular smoke generator (Tyszkiewicz S. Panasik M. Roczniki IPMiT 1998, 35/1, 137-149; Tyszkiewicz S. Roczniki IPMiT 1999, 36, 191-195).

Document DE19608102 C1 discloses a method for treating sausage-type products by means of hot smoking in a chimney, where the treated sausages are previously pre-treated, smoked, cooled and subjected to additional treatment. Wherein, the disclosed process is characterised in that the sausage products are preheated for 40 minutes at 20°C and then subjected to a two-step pre-drying and browning, where the first step is carried out for 15-20 minutes in an open system at 40°C. In turn, the second step is conducted for 20-30 minutes in a closed system at 50°C. The hot smoking of sausages is performed in several floors of the overpressure chimney of the chimney system with a direct underfloor fire source, with average temperatures in the chimney of 50-60°C and short temperature increases up to 110°C as well as a decrease in relative humidity; then the sausages are cooked with sausage broth at 70-80°C for 15-20 minutes, and subsequently, with no previous cooling, the sausages are matured, flavoured and dried in heat at 15-25°C for 24-36 hours.

Document CN103798350 A describes a smoking process controlled by a central processor. Wherein, the disclosed process comprises placing the product which is intended to be smoked in a smoking chamber and subjecting it to a computer-controlled process of smoking and cooking to obtain the desired colour, drying and other quality characteristics of the finished product. Wherein the step of obtaining the appropriate colour is conducted for 20 minutes at 55°C, the drying process is conducted for 40-50 minutes at 60°C, the smoking process is conducted for 18 minutes at 65°C, and the cooking step is conducted at 78-86°C. Polish patent description PL148679 discloses a device for smoking food products consisting of numerous combustion chambers. Each combustion chamber corresponds to an individual igniter switched on and off individually. This allows for the programming of the smoke generation process on the basis of successive burning of sawdust in individual chambers. Each combustion chamber contains a core which heats up to a temperature of approximately 400°C through an electric heating element, which leads to charring or burning of the sawdust. The core together with the heating element constitute an individual igniter. In rectangular combustion chambers equipped with a an igniter in the form of a centrally located core, the corners of the chambers were the zone of potentially unburned wood material. In order to completely burn out the wood material situated there, it was necessary to extend the heating time, which resulted in unnecessary energy loss. The replacement of the rectangular combustion chambers with cylindrical ones eliminated this defect, but caused the increase in the dimensions of the generator and in the consumption of materials for its construction as well as made the construction more difficult. In contrast, supplementary patent PL166455 B3 to patent PL148679 discloses a multi-chamber device for smoking food products, characterised in that the combustion chambers are formed by partitions set parallel to each other, in which heating elements are located, and the whole is made in the form of a cassette. In contrast, the disclosed device according to the second embodiment has a housing provided with a movable bottom or wall. The combustion chambers are surrounded by heating elements placed in the housing.

Document PL210120 B1 discloses a method of producing smoked meats from whole, uniform pork elements consisting in deboning pork elements, curing them by injection and/or dipping in a curing mixture containing salt, and then massaging, forming and thermal treatment. Before forming, the cured pork elements are soaked in cold water until the salt concentration of 1.8-2.2% in water is obtained, drained, while during their forming and tying with a rubber string, bay leaves are placed on their surface, especially on the non-fat surface and with the exception of the neck, and then they are dried, smoked and scalded. Wherein during thermal processing, the pork elements are dried at 70°C for 60 minutes, smoked at 70°C for 55 minutes, scalded in water at 75°C until 72°C is obtained inside the formed element and finally they are air-cooled to a temperature below 10°C inside the formed element.

Document DE102018214879 A1 relates to a device for smoking food, comprising a smoking chamber for holding the food to be smoked, holders which can be inserted into the smoking chamber) for holding the smoked food in the smoking chamber, and a first heat source, on which the smoking wood can be arranged for smoke production and a vacuum pump, which has a vacuum control valve via a supply line to which the smoking chamber is connected. The device comprises a second heat source for quickly heating the device.

Document DE3637892 A1 relates to a process and apparatus for purifying flue gases, wherein disclosed apparatus comprises a smoke generating device comprising a smoke purification device with cooling water condensing the gas and comprising a drain for draining the condensate.

Document FR2841437 A1 relates to a system to cook and smoke foods, e.g. meat and fish, has an oven where the food is cooked by radiant heat using smoke channels to carry hot smoke which is not in contact with the food. The food is smoked by chilled smoke fumes, where heavy matter has been separated by condensation to prevent food contamination. The hot smoke for cooking is generated by combustion of wood shavings. The smoke for smoking the food is generated by pyrolysis of wood sawdust, and it passes through a cooling stage before contact with the food. The system has a smoke extractor.

In the case of classic air smoking, wood for smoking is obtained from cut healthy trees (mainly deciduous), devoid of phloem, bark and large knots, and then, as a result of mechanical processing, formed into various types of blocks, briquettes, balks, logs, wood chips, sawdust. Smoking wood chips are made of fully adequate wood from deciduous trees, carefully selected and often subjected to additional refining treatments, such as partial substitution with wood from fruit trees, anti-mould sterilisation, pH change, addition of stabilising and supporting substances (Food smoking technology [Technologia w 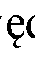 dzenia żywności], Edward Ko 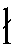 akowski Ed., PWRiL 2012, Warsaw, page 30).

The degree of saturation of air-smoked food products with smoke components depends on the smoking time, resulting from the density and chemical composition of the smoke, the speed of smoke flow and the required production hygiene.

In contrast, the optimal composition of smoke is obtained as a result of pyrolysis of the wood under strictly defined conditions. In the initial phase of wood heating (up to 170°C), above all, significant evaporation of hygroscopically bound water (at a temperature slightly above 100°C) and chemically bound water (at a temperature of 120-150 °C) takes place. Therefore, in this temperature range, an endothermic maximum, i.e. the highest demand for heat supplied from the outside, is present. When the temperature is increased to 200-280°C, gaseous wood decomposition products (CO₂ and CO) and some volatile organic compounds, such as acetic acid, formic acid, acetone and others, begin to release, with the maximum of their formation at 280-400°C. Starting from a temperature of approximately 280°C, the combustion process becomes exothermic, i.e. the decomposition of the wood mass no longer requires external heat, but occurs spontaneously with the simultaneous release of heat. The maximum concentration of the desired gaseous compounds in the smoke occurs in three temperature ranges of wood pyrolysis - the first of: 200-300°C which corresponds to the pyrolysis of hemicellulose; the second 300-425°C, to cellulose and the third: above 425°C, to lignin. The latter basically creates two concentration maxima: a small one - in the range of 300-400°C and a very high one in the range of 425-550°C (Food smoking technology [Technologia w 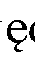 dzenia żywności], Edward Ko 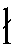 akowski Ed., PWRiL 2012, Warsaw, page 43).

In addition to the pyrolysis temperature, the composition of the smoke also depends on the amount of supplied oxygen, the chemical composition of the wood, and the rate of removal of volatile compounds from the combustion zone (Food smoking technology [Technologia w 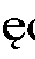 dzenia żywności], Edward Ko 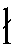 akowski Ed., PWRiL 2012, Warsaw, page 44).

The above-quoted book does not inform about the existence of air smoking methods that provide for a completely or partially closed smoke circulation in a smokehouse equipped with an integral smoke generator, which leads to the creation of a slight negative pressure that prevents the smoke from escaping outside the smokehouse. Leakages in the smoking chamber allow fresh air to be sucked into the chamber, supplementing the atmosphere with oxygen, which enables further pyrolysis. The description of these methods can be found in the quoted Polish patents and in the publication of Stanis 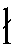 aw Tyszkiewicz in English entitled "Smoke generator" published in Polish Technical Review and containing information on documents and methods used in Polish meat industry plants.

These publications do not contain information on the effect of the process conditions on the level of PAHs in smoked food, because the relevant studies have been conducted in recent years and have not been published before. The own research of the author of the application indicates that the true level of PAH contamination is commonly underestimated because of the fact that the volatility of these compounds is not considered in the laboratory technique.

Polycyclic aromatic hydrocarbons (PAHs) are carbon compounds formed in the processes of incomplete combustion (with limited air access) of organic substances. These substances may also contaminate food as a result of technological processes to which it is subjected - in particular, high PAH content may be caused by the process of smoking and non-diaphragm drying of food (Menichini E., Bocca B. in: Encyclopaedia of Food Sciences and Nutrition 2nd edition, Caballero B. (ed.), 2003; 4616-4625).

Because of the carcinogenic potential of food contaminated with PAHs, some measures have been taken to limit the content of PAHs. These include legal restrictions associated with smoked foods, water and recommended limits for refined oils and fats (Menichini E., Bocca B. in: Encyclopaedia of Food Sciences and Nutrition 2nd edition, Caballero B. (ed.), 2003; 4616-4625). The maximum levels (MRLs) of PAHs in foodstuffs are regulated in Commission Regulation (EU) No. 835/2011 of August 19, 2011 amending Regulation (EC) No. 1881/2006 (Journal of the European Union EU L 215/4 of August 20, 2011).

There are several ways to reduce the PAH content in smoked products. They include (Vaz-Velho M. Smoked Foods/Production in: Encyclopaedia of Food Sciences and Nutrition 2nd edition, Caballero B. (ed.), 2003; 5302-5309):
- the use of a separate smoke generator, maintaining the pyrolysis temperature between 200 and 425°C
- electrostatic smoke filtration
- generation by superheated steam
- the use of liquid smoke.

Moreover, the method of smoking food products known from European patent application EP3524057 A1 includes filtering the smoke in order to reduce the content of PAHs containing four or more benzene rings. The PAH level is reduced by passing the smoke through the filter or direct contact of the fuel with the filter. Wherein, the filtering of the smoke is carried out in the presence of a filter material in the chamber providing the smoke source. The filter can be a natural or synthetic porous mineral. Specifically, said mineral is a zeolite. In a particularly preferred embodiment the zeolite is clinoptilolite. Typically, for a filter separated from the fuel, the filter material in powder or granular form is packaged and held in or on a filter holder such as a box or column. When preparing filters for use in the disclosed solution, the filter material may also be combined with other ingredients, e.g., carrier material and/or mineral compounds.

Literature (Food smoking technology [Technologia w 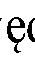 dzenia żywności], Edward Ko 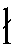 akowski Ed., PWRiL 2012, Warsaw, pages 43-44) indicates that detectable amounts of PAHs (2-4 rings) are observed at temperatures as low as above 400°C, but benzo[a]pyrene clearly appears only at temperatures above 500°C, and the optimum of its formation is in the temperature range of 800-900°C. The quoted literature is a review publication referring to quite old data, i.e. the work from 1962 and McGrark from 2003, regarding temperature ranges not used in food smoking.

Commonly used detection thresholds for PAHs in food have lowered contractual concentrations because of the varying volatility of free substances under the conditions of fragmentation of samples prepared for testing.

Unexpectedly, we experimentally found that the first maximum of benzo(a)pyrene formation occurs at a temperature below 325°C. On this basis, we have developed a new method of smoking food products, especially products of animal origin, enabling the purification of smoke from PAHs, using pyrolysis temperatures lower than 425°C - i.e. the method according to the invention, and removing smoke generated at boiling points of benzo(a)pyrene and dibenz(a,h)anthracene from the smoking chamber.

The above state of the art shows that the methods of air smoking and smoking devices known so far do not provide sufficient means to reduce PAHs in smoke.

The aim of the invention is to provide an improved method of air smoking, allowing to obtain food products with a reduced content of PAHs, and to provide a device for using this method.

The invention is set out in the appended set of claims.

**The invention provides the following advantages:**
- it allows for the removal of highly carcinogenic PAHs from the smoke, allowing for the production of healthier smoked food products with good quality and microbiological stability characteristics;
- ensures optimisation of the smoking process, especially shortening the smoking time with smoke, the concentration of which in a closed chamber increases much faster than in an open chamber;
- provides a multiple reduction in the amount of burned wood;
- ensures the environment friendly process - carbon monoxide CO and carbon dioxide CO₂ do not penetrate into the atmosphere;

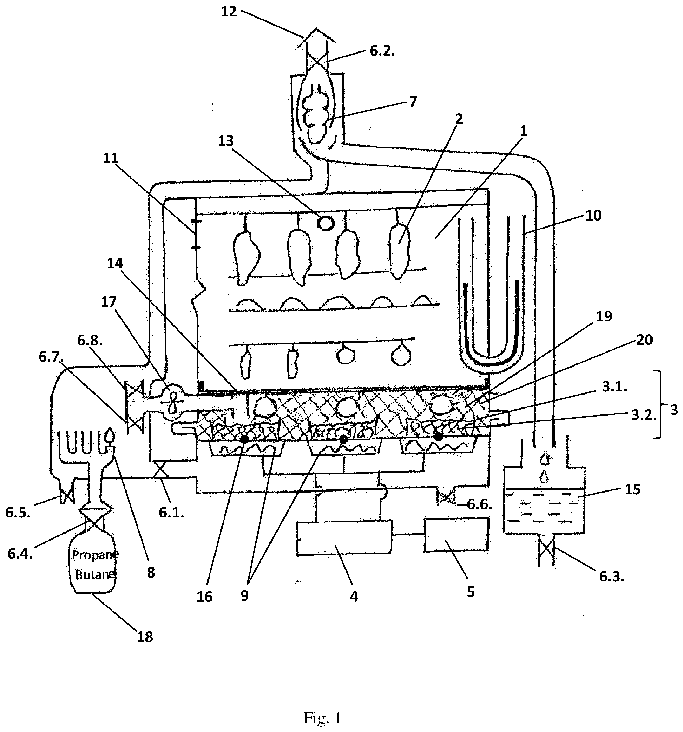

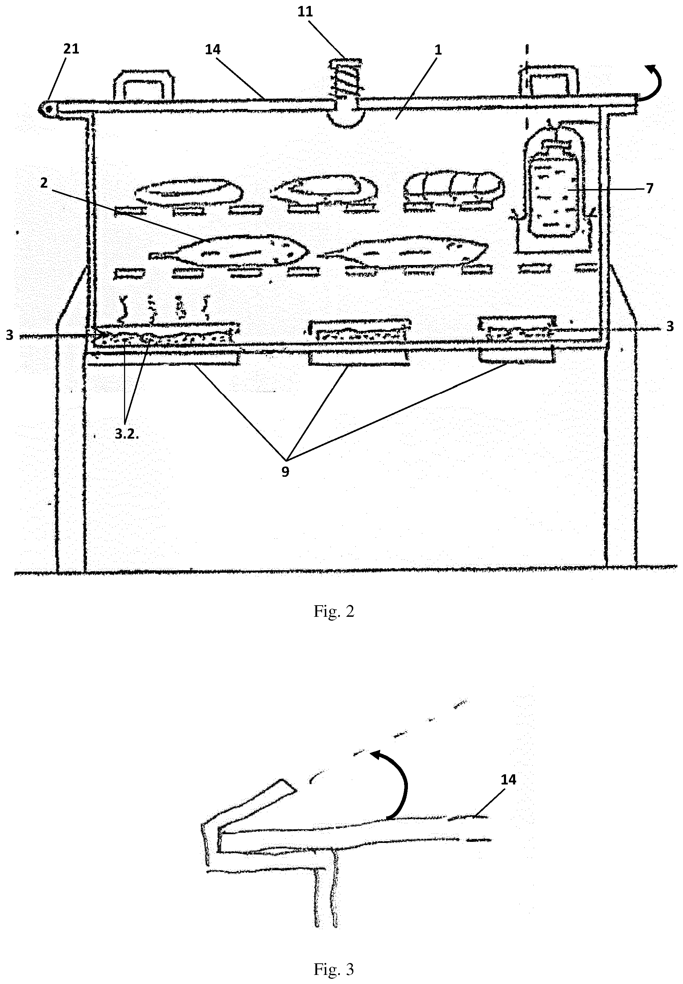

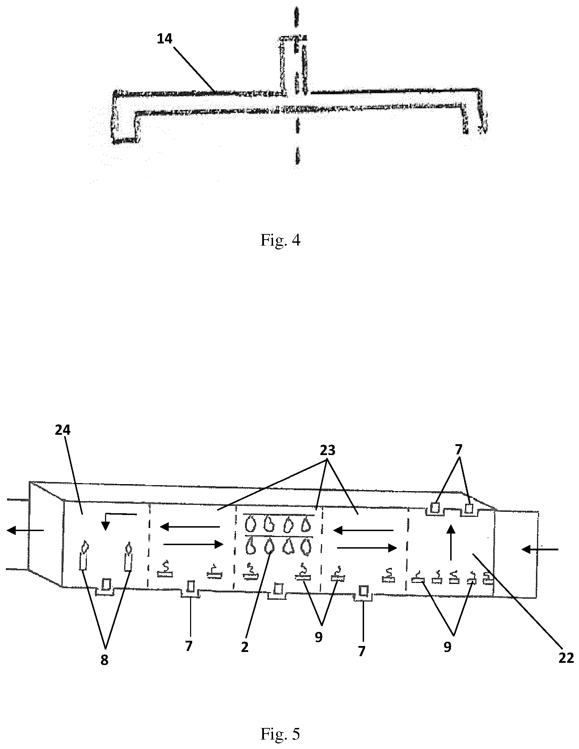

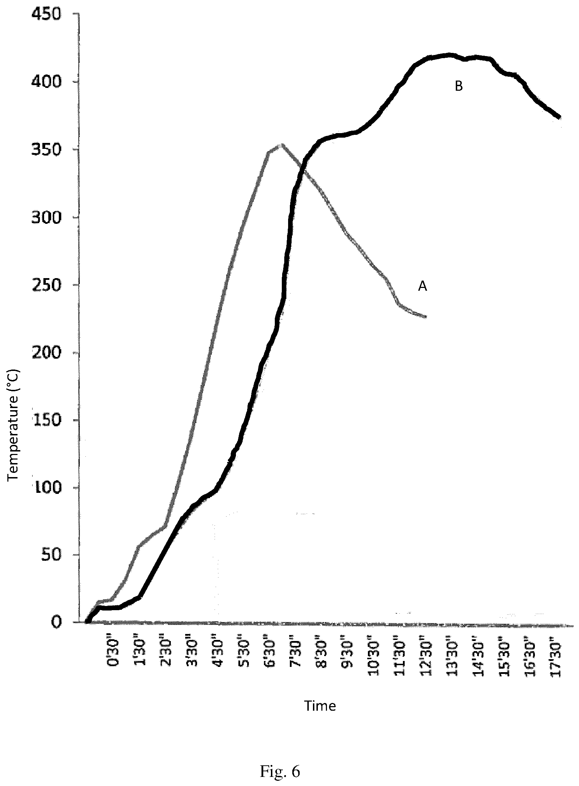

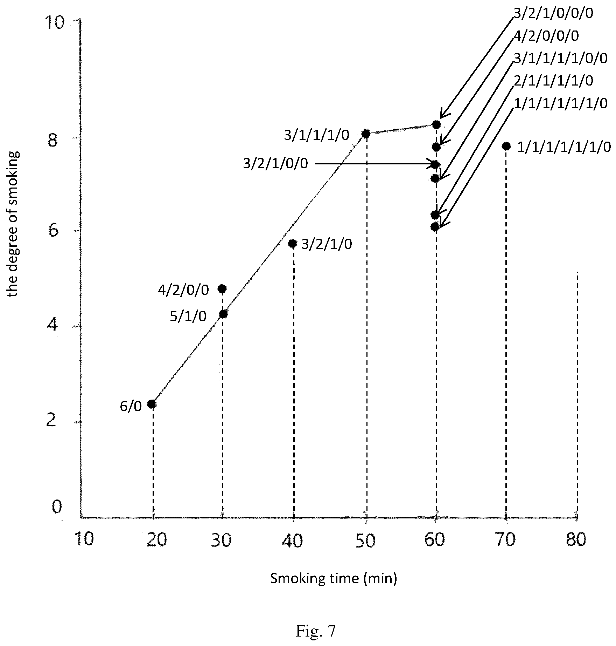

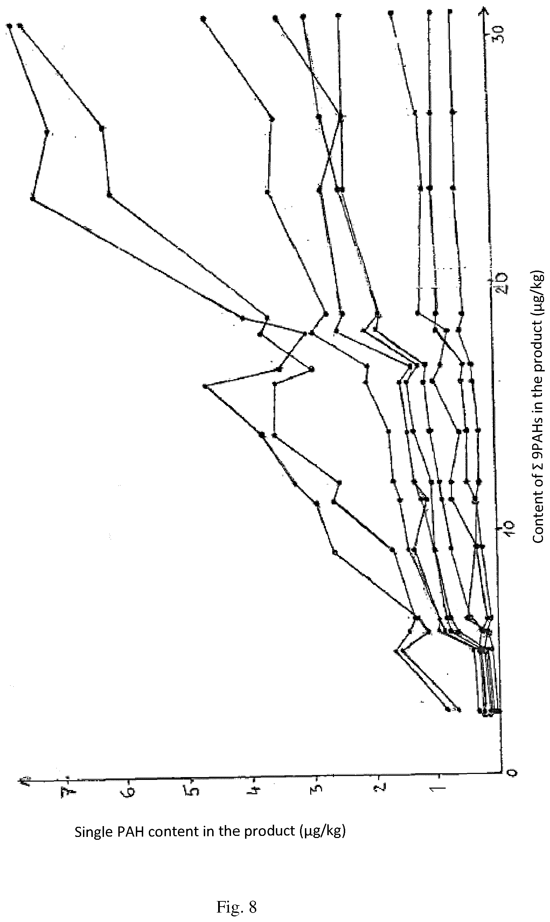

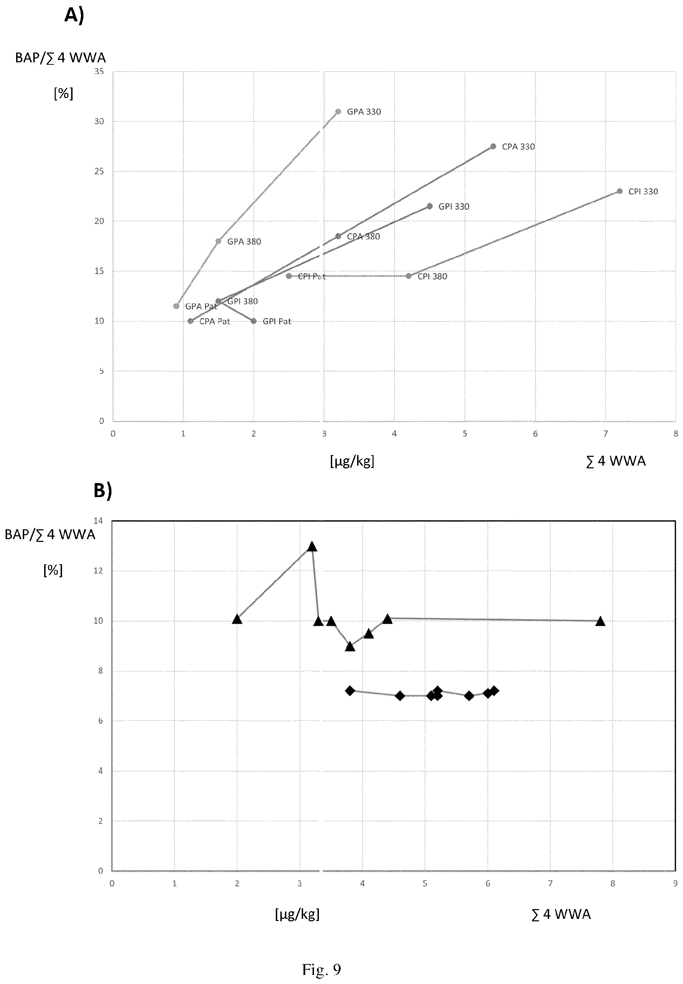

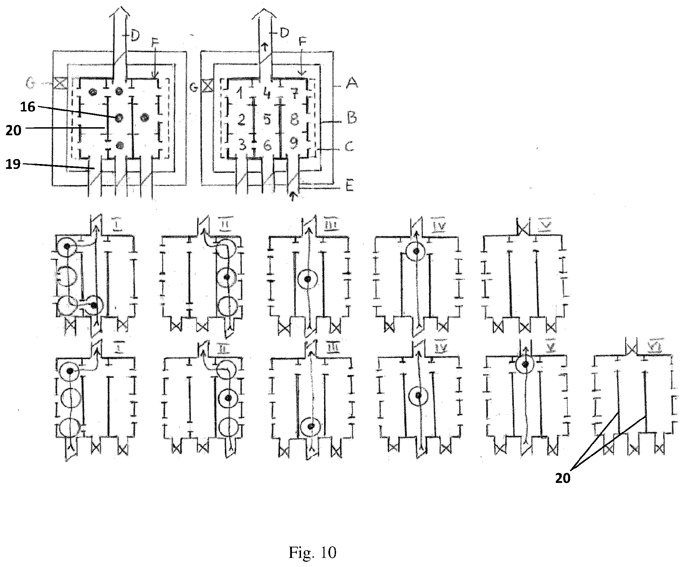

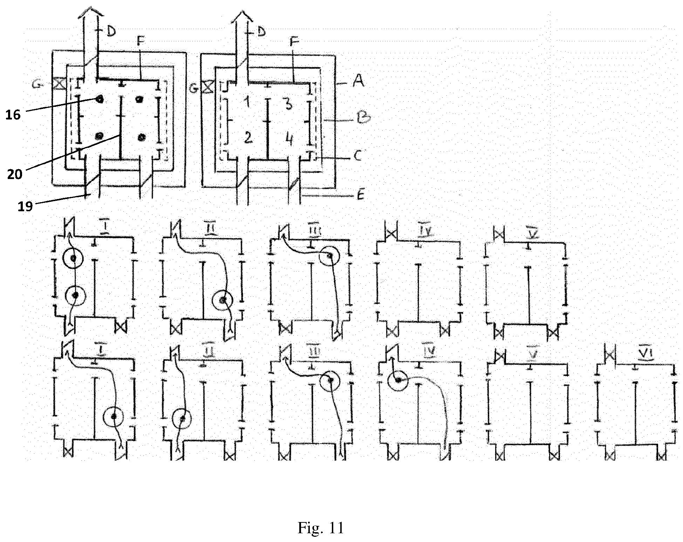

The invention is shown in the drawing, in which Fig. 1 schematically shows the device according to the invention; Fig. 2 shows a section through a portable version of the device according to the invention with a first variant of the hinge, where the arrow indicates the direction of movement of the cover; Fig. 3 shows a fragment of the cover of Fig. 2 with an alternative hinge where the arrow indicates the direction of movement of the cover; Fig. 4 shows a cover variant; Fig. 5 shows a diagram of a smoking tunnel for the production of dry-smoked and aged hams and/or pork shoulders that are moved on a conveyor; Fig. 6 shows a comparison of the course of pyrolysis of different weighed amounts of beech chips, where curve A shows the course of pyrolysis for a too small weighed amount - 50 g, while curve B shows the course of pyrolysis for the correct weighed amount of beech chips - 100 g; Fig. 7 shows the work of the operational programme of the modular smoke generator in the process of smoking food products and the assessment of the degree of smoking based on the intensity of food colour assessed on a 10-point scale, where the numerical symbols indicate the number of modules working simultaneously in individual steps of the process; Fig. 8 shows a summary of the content of 9 selected PAHs in food products; Fig. 9 shows a comparison of the contamination of smoked products, where A) shows data for smoked sausages, B) shows analogous data for smoked bacon; Fig. 10 shows the construction of the heating element in the nine-module version; Fig. 11 shows the construction of the heating element in the four-module version.

### Example 1.

The device according to the invention is intended for air smoking of food products, especially of animal origin (e.g. hams). It is shown schematically in Fig. 1, where 1 indicates a smoking chamber; 2 indicates a smoked product; 3 indicates a smoke generator consisting of a container for wood material 3.1 and wood material 3.2; 4 indicates heaters power supply; 5 indicates heater power switches; 6 indicates valves where: 6.1 is a valve for removing smoke from the smoking chamber to the purification zone; 6.2. is a chimney closing valve; 6.3. is a drain valve for acidified water from the condensate container; 6.4. is a valve for a cylinder containing propane-butane; 6.5. is a valve for venting and cleaning the smoke purification zone; 6.6. it is a valve for the air supply to the pyrolysis zone; 6.7. it is a valve for the collection of PAH-contaminated smoke to the after-combustion zone; 6.8. is a valve directing the smoke directly to the condenser. In turn, 7 indicates a water vapour condenser; 8 indicates smoke igniter; 9 indicates a heating element; 10 indicates a pressure gauge; 11 indicates a safety element; 12 indicates a chimney; 13 indicates an atmospheric humidity gauge; 14 indicates a cover (hood) of the smoke generating space, which is used for loading the wood material 3.2.; 14' is a pipe; 15 indicates a condensation tank; 16 indicates a temperature gauge; 17 indicates a fan; 18 indicates a propane-butane cylinder equipped with a gas pressure reducer.

In this non-limiting embodiment, the device according to the invention is provided with one chamber 1. However, the device according to the invention may be provided with more chambers 1 (e.g. two, three, four chambers 1). Wherein, in the multi-chamber variant of the device according to the invention, said many chambers 1 are operated by a common chimney 12, an igniter 8, a propane-butane cylinder 18, a condensate tank 15 and a computer managing the smoking process.

For most of the time of operation (i.e. during the smoking cycle) chamber 1 is closed and smoke generation is a result of pyrolysis with a limited supply of atmospheric oxygen and limited emission of carbon monoxide and dioxide as well as polycyclic aromatic hydrocarbons PAHs.

In this non-limiting embodiment, the device according to the invention is equipped with one chamber 1, one igniter 8, one temperature gauge 16, one safety element 11, one humidity gauge 13.

Wherein, the temperature gauge 16 is a device consisting of sensors located in the chamber 1 and the proper measuring device located outside the chamber 1 of the device.

At the bottom of the chamber 1 a heating element 9 with a modular structure is placed. In this example, the heating element is equipped with nine modules arranged in a horizontal setting under the smoked products 2. Each module of the heating element 9 consists of a heater on which a smoke generator 3 consisting of a wood material container 3.1 with inserted wood material 3.2 is placed. There is a space between the heaters of individual modules of the heating element 9. In this embodiment, the heaters are square heating plates, and the containers for the pyrolised material 3.1. are made of a metal mesh equipped with holes. A top view of such a nine-module heating element 9 is shown in Fig. 10, where 19 indicates smoke exhaust channels and 20 indicates partitions dividing the smoke generation zone into forced flow channels at the step of cleaning from some of the more toxic PAHs.

Although square heaters in the form of heating plates are used in this non-limiting example, heaters of other shapes (e.g., oval or round) may also be used in the present invention.

The provision of free space between the modules of the heating element 9 is of great importance for the smoking process. Free space surrounds the edges of each thin layer and through this space fresh air or smoke generated earlier or with a lower temperature than the current pyrolysis temperature can penetrate to the bed of pyrolised wood material 3.2., which ensures constant circulation of smoke forced by its temperature. Warmer smoke rises to the upper parts of the chamber 1 displacing the colder one flowing down to the outer edges of each pyrolised batch of wood material 3.2. in the form of a briquette and a thin layer of chipped wood in a container 3.1. made of wire mesh.

Electric wires with a switch 5 are led to each heating element module 9, ensuring connection of the modules of the heating element 9 with the power supply 4. In addition, each of the modules of the heating element 9 is independently controlled by a programmable microprocessor controller, which enables the implementation and control of many smoking programmes stored in the memory of the microprocessor controller.

In addition, the chamber 1 is equipped with a smoke removal collector, which together with the partitions 20 form smoke exhaust channels whose inlets in the form of hoods are located above the heating elements. The hoods are turned on at the moment set by the microprocessor controller and suck the removed smoke into the collector. The smoke exhaust collector leads to the igniter 8, the flame of which is provided by the propane-butane contained in the cylinder 18 connected to the chamber 1 with the valve 6.4., and on which igniter 8 smoke containing PAHs is burned to CO₂ and, after saturation with water vapour, is condensed on the condenser 7 closed by the valve 6.3 and connected to a drain for draining condensate, which leads to the condensation tank 15. In the present embodiment, one condenser 7 is placed inside the chamber 1 of the device according to the invention.

In this embodiment, the condenser 7 is in the form of a heat exchanger with temperature control in the range of water vapour dew point. The water vapour condenser 7 should have developed surfaces.

In this non-limiting embodiment, the smoking device according to the invention further comprises a pressure gauge 10, a safety element 11 in the form of a film-filled hole to prevent explosion or implosion, and a purified smoke humidity gauge 13. The installation of the humidity meter 13 is important because the amount (concentration) of the condensate with CO₂ removed from the device depends on the humidity of the air, and it is also possible to test the possible composition of the atmosphere in the condensate at various steps of smoking.

### Example 2.

Smokehouse as in Example 1, except that the heating element 9 is equipped with three modules whose heaters are oval heating plates (alternatively, e.g. circular burners can be used). The modules are placed in a horizontal arrangement under the smoked products 2 and are separated from each other by a certain free space, which in the case of using oval (or circular) modules of the heating element 9 occurs spontaneously. Free spaces act as channels enabling natural circulation of gases forced by temperature differences. As the temperature of the smoke increases during the wood pyrolysis process, the mechanism works without the use of forced mechanical ventilation, which is needed in the case of smoking and ageing tunnels, in which wood pyrolysis is activated periodically.

Smoking in this way is repetitive and there are no areas of smoke stagnation resulting in various effects of under-smoking or over-smoking of products. Since the oxygen-rich smoke from the earlier process cannot flow upstream of the increasingly lighter smoke, it flows downstream and is sucked in at the side edges of the pyrolised wood layer.

### Example 3.

In this non-limiting embodiment, the device according to the invention constitutes a field smokehouse for air smoking (but the construction of said field smokehouse can also be, for example, equipment for vehicles), which is schematically shown in Fig. 2, where 1 indicates a smoking chamber, 7 indicates a condenser with a condensation tank, 11 indicates a safety element, which in this embodiment is a spring-loaded process control and safety valve with adjustable opening pressure - a particular embodiment of chimney 12, 14 indicates a movable cover (a hood) used to load the wood material 3.2., the smoked products 2 and for cleaning the inside of the chamber 1, while 21 indicates the hinge and 3.2. indicates the pyrolised wood material. The device is equipped with power supply switches.

The process control is partly automatic. During pyrolysis, the pressure drops and the valve (i.e. safety element 11, which is a particular embodiment of chimney 12) lets cold air into the chamber 1. The end of pyrolysis being a result of the temperature in the chamber being higher than the ambient temperature opens the valve (i.e. the safety element 11) or lifts the cover from the lighter side.

It is possible to control the flow of smoke by heating the side where the condenser is located 7. The device shown in Fig. 2 has an arrangement of modules of the heating element 9 that favours the flow of smoke on the side where the condenser 7 is installed.

In this embodiment, the condenser 7 is in the form of a cylinder with ice, while the process controller 11 is a spring-loaded safety valve. In order to reduce greenhouse gas emissions, CO and CO₂ generated in the chamber 1 flow past the cold cylinder 7 and saturate in the condensed water vapour. In turn, the heating element 9 is in the form of a three-module heating plate on which containers with wood material 3.2 are placed. Wherein, as indicated in Fig. 2, in this embodiment, the modules of the heating element 9 are of different sizes, with one module being larger than the other two. In addition, the three-module heating plate is heated from the outside and is a metal plate (alternatively, e.g. a ceramic plate can be used) divided into modules heated successively at individual steps of the smoking process.

### Example 4.

The smokehouse as in Example 3, except that the movable cover 14 opens on the right side after the smoking process is completed, after the disappearance of the negative pressure caused by the wood burning process in the last active module. Wherein, said cover 14 from the hinge side is equipped with a longitudinal protrusion increasing its tightness (Fig. 3).

### Example 5.

The smokehouse as in Example 3, except that the hinge cover 14 is equipped with two vertical protrusions increasing its tightness during the smoking process (Fig. 4).

### Example 6.

In this non-limiting embodiment, the device according to the invention for air smoking is in the form of a tunnel for the production of dry-smoked pork hams, which are moved on a conveyor to successive zones of the tunnel. The tunnel diagram is showed in Fig. 5, where arrows with closed heads indicate the main directions of gas circulation in the tunnel. The device is equipped with five working zones.

As indicated in Fig. 5, said tunnel comprises the following zones: an initial zone 22, three intermediate zones 23 and an final zone 24. Wherein, the initial zone 22 of the tunnel, which constitutes the place of preliminary drying and intensive smoking, is equipped with numerous modules of the heating element 9 and two condensers 7 located above the ceiling with a condensed water vapour removal system. The intensification of the smoking process results from the switching-on of many modules of the heating element 9 in the zone 22. In this non-limiting embodiment, there are five modules of the heating element 9 in zone 22.

Wherein, in this embodiment, the modules of the heating element 9 consist of metal open containers for the wood material 3.2., which is heated from below by an electric plate until the exothermic burning temperature is obtained.

The burning temperature depends on the thickness of the layer of the wood material 3.2. and is regulated so as not to exceed the temperature of 425°C, as in Fig. 6. In this zone, a smoke exhaust channel 19, which discharges smoke at a temperature of 260-280°C and 310-320°C, is installed. The need for the installation of a smoke exhaust channel 19 in the initial zone 22 results from the fact that smoke components at the beginning of the smoking process have a chance to penetrate deeper into the tissues and cover fat of the smoked products 2 and cannot be easily removed during purification of the atmosphere at the end of the process during ageing and surface drying of the final product 2.

The intermediate zones 23 are divided into an supplementary smoking zone 23a, a drying zone 23b and a product ageing zone 23c. In the intermediate zones 23, the condensers 7 are located in the heavy carbon dioxide collection channels, and each of the intermediate zones is equipped with two modules of the heating element 9.

In the final zone 24 of the tunnel, smoked products 2 are unloaded. Wherein, the unloading starts the next daily production of hams. In the final zone 24 of the tunnel, igniters 8 are located to purify the atmosphere in the tunnel before the doors are opened and the unloading is started. Wherein the condenser 7 is located in the carbon dioxide collection channel.

The smoking process is controlled by a programmable microprocessor controller, which enables the implementation and control of many smoking programmes stored in the controller's memory, including the control of the smoking process.

### Example 7.

The method of air smoking according to the invention is characterised by the fact that the temperature of the pyrolysis process does not exceed 425°C, and the production of smoke includes the following steps:
(a) Loading a batch of wood material 3.2. into the container for wood material 3.1. placed on the heating element 9 and generating smoke during the burning of the wood material 3.2.; wherein in the closed chamber 1 the wood material 3.2. is gradually heated from ambient temperature to above 100°C so that pyrolysis starts as soon as the wood material 3.2. is uniform in terms of water content. The start of the wood pyrolysis process results in a decrease in the pressure in the chamber 1, which is indicated by the pressure gauge 10.
(b) Turning off the heating provided by the heating element 9 after a temperature of approximately 270°C (or slightly lower, determined experimentally for specific climatic conditions, mainly atmospheric humidity and oxygen content in the air in the case of smokehouses operating in mountainous regions) is obtained.
(c) Periodically directing, through the smoke exhaust channels, the smoke generated during pyrolysis in the temperature range of 260-280°C and 310-320°C to a separate circuit of the purification device, where the smoke containing PAHs is burned on the igniter 8 to CO₂ and after saturation with water vapour is condensed on the condenser 7, and the resulting acidic condensate is collected in the lower part of the chamber, and, after being neutralised, can be easily disposed of.
(d) After opening the valve 6.2. the smoke is returned to the chamber 1 or discharged outside through the chimney 12.

In step a), a thin layer of wood material 3.2 is applied, the thickness of which depends, among others, on from the granulation of the material. The choice of the thickness of the layer is an important activity, and the optimum thickness of the layer of wood material used in the process according to the invention should be determined empirically, so that the layer of the applied wood material is sufficient until the end of the planned process, with no fear of exceeding the limit of 425°C, but also that the temperature is not lower than approximately 400°C.

Fig. 6 shows a comparison of the pyrolysis of two different weighed amounts of beech chips, where the letter A indicates a diagram of the unfavourable distribution of beech chips pyrolysis over time, and the letter B indicates a diagram of the favourable distribution of beech chips pyrolysis over time. Wherein, the parameters of the weighed amounts are presented in Table 1 below:

**Table 1: parameters of tested weighed amounts of beech chips**

| Sample No. | Chips weighed amount [g] | Layer thickness [mm] | Amount of chips per cm² of the heater (heating element 9) [g] | Chart |
|---|---|---|---|---|
| 1 | 50 | 9 | 0,19 | A |
| 2 | 100 | 17 | 0,38 | B |

In this embodiment, in step a) 100 g of the wood material 3.2, which includes beech chips, is used. Wherein, the device according to the invention is loaded with the wood material 3.2. using the manual system. However, an automated loading system can also be used.

Alternatively to wood chips, briquette in the form of glued or sewn small fragments of wood can also be used, which enables the automation of the smoking process - e.g. by using a movable belt to feed the briquette. The use of briquette significantly facilitates the smoke purification process.

Fig. 7 shows the work of the operational programme of the modular smoke generator 9 in the process of smoking food products (smoked Frankfurters) and the assessment of the degree of smoking based on the intensity of food colour assessed on a 10-point scale. Wherein, the degree of smoking refers to the colour of the sausages, the purpose of smoking is to permanently dye them red as a result of the formation of carboxymyoglobin during smoking, which depends on the concentration of carbon monoxide CO in the closed chamber 1.

Wherein, the controlled device according to the invention is a closed smoke circulation system in the chamber 1, and part of the atmosphere is either enriched or deprived. Condensation of water on the condenser 7 lowers the pressure in the closed chamber 1, so it is not complete closing, e.g. by leaving a gap, is sufficient.

### Example 8.

### Controlling the air smoking process and verification of the beneficial effects of the air smoking method according to the invention, ensuring the purification of PAH smoke

For precise control of the process and pyrolysis programmes settings, it is necessary to analyse the composition of PAHs in the smoked product, distinguishing between PAHs originating from the smoking process and PAHs brought in by contaminated raw material.

In accordance with the existing European law and other international regulations, the content of benzo(a)pyrene and the sum of benzo(a)pyrene, benzo(a)anthracene, benzo(b)fluoranthene, chrysene is limited in certain food products. EU regulations do not specify PAH test methods, and the zero concentration is assumed as the lower detection limit.

To measure the content of PAHs in food products, analytical or physical methods can be used (e.g. near-infrared radiation, electronic multi-sensor metres - e.g. Cyrano 32 equipped with 32 sensors, including sensors of air humidity (smoke) being the background for the concentration results of other volatile substances) (Tyszkiewicz J, Tyszkiewicz S. An introduction to chemometrics for food science. Pol. J. Food Nutr. Sci. 2004, 13/54, S1: 75-86).

Fig. 8 presents a summary of the content of PAHs in smoked meat products and sausages produced in the Department of Meat and Fat Technology of the Institute of Agriculture and Food Biotechnology in Warsaw.

Fig. 9a presents a comparison of the contamination of smoked products (sausages), where each point is described by the type of product:
- GPA - thick scalded sausages
- GPI - thick roasted sausages
- CPA - thin scalded sausages
- CPI - thin roasted sausages
and the applied smoking process:
- 330 - smoking at a constant temperature of 330°C
- 380 - smoking at a constant temperature of 380°C
- Pat - smoking according to the method of the invention

The lines in figure 9a and 9b combine data for identical product types and do not constitute a function.

In contrast, Fig. 9b shows analogous data for smoked meats from eight bacons. The symbol ▲ indicates meats smoked at a constant temperature of 380°C, while the symbol ◆ indicates products smoked according to the process of the invention.

The highest relative concentrations of benzo(a)pyrene occur in the version of the process with a lower temperature, which contradicts the literature claims expressed in the publication edited by E. Ko 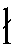 akowski (Food smoking technology. [Technologia w 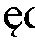 dzenia żywności], Edward Ko 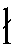 akowski Ed., PWRiL 2012, Warsaw, page 43) that the higher the pyrolysis temperature of wood in the food smoking process, the higher the concentration of benzo(a)pyrene.

The value of the benzo(a)pyrene to Σ4PAH ratio of 7% is in balance with the environment and the variability of the raw material disappears, despite the fact that pork bacons from different animals were tested.

### Example 8.

### Construction of the heating element 9 in the 9-module version

In this embodiment, the device according to the invention is a standard single-trolley smokehouse with a chamber 1 volume of approximately 2 m³ and a square heating element 9 consisting of nine modules, with a total area of approximately 1 m². The system of the modules is presented in Fig. 10, wherein **A** stands for the outline of the outer walls of the chambers 1, and **B** stands for the outline of its inner walls. In these chambers, food products can be smoked using cold, warm or hot smoke, and after smoking, they can be cooled to room temperature or roasted using smoke-free hot air. The letter **C** stands for the outline of the roof covering the room **F** (i.e. chamber 1) containing a modular heating element 9 performing pyrolysis of the chipped wood material 3.2. spread in a thin layer in the container 3.1. on a heating plate electrically heated until the temperature of exothermic wood pyrolysis is reached (approximately 280°C) and after switching off the electric heating heated to a temperature slightly higher than 400°C (less than 425°C), without the risk of self-ignition of combustible smoke gases, and then its temperature decreases fairly quickly to ambient temperature. According to the invention, the smoke generated during the pyrolysis proceeding at the boiling points of two very toxic PAHs, benzo(a)pyrene with a boiling point of approximately 310°C and dibenz(a,h)anthracene with a boiling point of approximately 270°C, is removed from the room **F** above the modules of the heating element 9. This is achieved by air relief systems consisting of the pipe ducts **E** supplying fresh air to the zones above the working modules and the chimney 12 removing contaminated smoke from the chimney 12 indicated in Fig. 10 as **D.** The ducts and the chimney 12 have valves that are closed and opened in accordance with the computer programme for controlling the smoking process, but they can also be controlled manually by the operator observing the results displayed on the screen of the multi-sensor pyrolised wood temperature gauge. The temperature measurement sensors in the diagram are indicated with black dots, and the modules operating at a given step of smoking (subsequent steps of the process are numbered with Roman numerals) with white circles. Closed valves are indicated as **X** and open ones as /. The pressure relief valve in the chamber is indicated with the letter **G,** and the flow direction of the removed smoke is indicated with arrows. The diagram does not include an air pressure gauge 10 useful as an indicator of the influence of the smokehouse location on the boiling point of the volatiles present in the smoke. In Fig. 10 Roman numerals I to VI indicate the successive steps of smoke generation, while number 16 indicates the temperature gauge (more precisely, the sensors of the temperature gauge), number 19 indicates smoke exhaust channels, and number 20 indicates partitions.

### Example 9.

### Construction of the heating element 9 in the four-module version

The device as in Example 8, except that the heating element accommodates four modules (Fig. 11).
temperature of wood in the food smoking process, the higher the concentration of benzo(a)pyrene.

The value of the benzo(a)pyrene to Σ4PAH ratio of 7% is in balance with the environment and the variability of the raw material disappears, despite the fact that pork bacons from different animals were tested.

### Example 8.

### Construction of the heating element 9 in the 9-module version

In this embodiment, the device according to the invention is a standard single-trolley smokehouse with a chamber 1 volume of approximately 2 m³ and a square heating element 9 consisting of nine modules, with a total area of approximately 1 m². The system of the modules is presented in Fig. 10, wherein **A** stands for the outline of the outer walls of the chambers 1, and **B** stands for the outline of its inner walls. In these chambers, food products can be smoked using cold, warm or hot smoke, and after smoking, they can be cooled to room temperature or roasted using smoke-free hot air. The letter C stands for the outline of the roof covering the room **F** (i.e. chamber 1) containing a modular heating element 9 performing pyrolysis of the chipped wood material 3.2. spread in a thin layer in the container 3.1. on a heating plate electrically heated until the temperature of exothermic wood pyrolysis is reached (approximately 280°C) and after switching off the electric heating heated to a temperature slightly higher than 400°C (less than 425°C), without the risk of self-ignition of combustible smoke gases, and then its temperature decreases fairly quickly to ambient temperature. According to the invention, the smoke generated during the pyrolysis proceeding at the boiling points of two very toxic PAHs, benzo(a)pyrene with a boiling point of approximately 310°C and dibenz(a,h)anthracene with a boiling point of approximately 270°C, is removed from the room **F** above the modules of the heating element 9. This is achieved by air relief systems consisting of the pipe ducts **E** supplying fresh air to the zones above the working modules and the chimney 12 removing contaminated smoke from the chimney 12 indicated in Fig. 10 as **D.** The ducts and the chimney 12 have valves that are closed and opened in accordance with the computer programme for controlling the smoking process, but they can also be controlled manually by the operator observing the results displayed on the screen of the multi-sensor pyrolised wood temperature gauge. The temperature measurement sensors in the diagram are indicated with black dots, and the modules operating at a given step of smoking (subsequent steps of the process are numbered with Roman numerals) with white circles. Closed valves are indicated as **X** and open ones as /. The pressure relief valve in the chamber is indicated with the letter **G,** and the flow direction of the removed smoke is indicated with arrows. The diagram does not include an air pressure gauge 10 useful as an indicator of the influence of the smokehouse location on the boiling point of the volatiles present in the smoke. In Fig. 10 Roman numerals I to VI indicate the successive steps of smoke generation, while number 16 indicates the temperature gauge (more precisely, the sensors of the temperature gauge), number 19 indicates smoke exhaust channels, and number 20 indicates partitions.

### Example 9.

### Construction of the heating element 9 in the four-module version

The device as in Example 8, except that the heating element accommodates four modules (Fig. 11).

## Claims

1. A device for air smoking of food products, especially of animal origin, comprising at least one smoking chamber or smoking tunnel and a heating element, wherein the heating element located at the bottom of chamber has a modular structure and comprises at least three modules arranged in a horizontal setting under smoked products, wherein each module consists of a heater and a container for pyrolised wood material (3.2), and there is a distance between the heaters of individual modules, and the chamber (1) is equipped with a smoke generator (3) located above the heating element (9), and the chamber (1) is equipped with a smoke purification device, wherein the purification device constitutes at least one cooling water vapour condenser (7), **characterised in that** said condenser (7) is connected to a drain for draining the condensate; wherein a hood (14) directly or indirectly attached to a chimney (12) is connected to the chamber (1) creating a partially and temporarily open ventilation system; said device further comprises a smoke exhaust collector leading to the igniter (8), the flame of which is provided by the propane-butane contained in the cylinder (18) connected to the chamber (1) with the valve (6.4.), and on which igniter (8) smoke containing PAHs is burned to CO₂ and, after saturation with water vapour, is condensed on the condenser (7) closed by the valve (6.3) and connected to a drain for draining condensate..

2. The device according to claim 1, **characterised in that** it comprises an igniter (8), a pressure gauge (10), at least one atmospheric humidity gauge (13), at least one temperature gauge (16), or a combination thereof.

3. The device according to claim 1 or 2, **characterised in that** the modules of the heating element (9) are circular modules or oval modules.

4. The device according to any one of the preceding claims from 1 to 3, **characterised in that** the condenser (7) is a heat exchanger with temperature control in the range of water vapour dew point.

5. The device according to any one of the preceding claims from 1 to 4, **characterised in that** the heating element (9) consists of four identical modules.

6. The device according to any one of the preceding claims from 1 to 4, **characterised in that** the heating element (9) consists of three modules of different sizes.

7. The device according to any one of the preceding claims from 1 to 6, **characterised in that** the chimney (12) consists of a safety element (11) in the form of a hole plugged with a film or paper, or in the form of a spring-loaded safety valve.

8. The device according to any one of the preceding claims from 1 to 7, **characterised in that** the heater of the module of the heating element (9) is a heating plate.

9. The device according to any of the preceding claims from 1 to 8, **characterised in that** the heating element (9) is powered by an electric power supply (4) with a switch (5) and controlled by a microprocessor controller.

10. A method of air smoking of food products, especially of animal origin, in an atmosphere of smoke with a time-varying concentration in the smoking chamber of the device according to any one of the preceding claims from 1 to 9, **characterised in that** the temperature of the pyrolysis process does not exceed 425°C, and the production of smoke comprises following steps: (a) loading a batch of wood material (3.2.) into a wood material container (3.1.) placed on modules of the heating element (9) comprising at least three modules and forced generating smoke as the wood material (3.2.) is being burned; (b) turning off the heating provided by the heating element (9) once the natural pyrolysis temperature of wood of approximately 270°C has been reached; (c) periodically directing, through the smoke exhaust channels (19), the smoke generated during pyrolysis in the temperature range of 260-280°C and 310-320°C to a separate circuit of the device, where the smoke containing PAHs is burned on the igniter (8) to CO₂ and after saturation with water vapour is condensed on the condenser (7), and the condensate is collected in the lower part of the chamber (1); (d) while the purified smoke is returned to the chamber (1) or discharged outside through the chimney (12).

11. The method according to claim 10, **characterised in that** in step a), wood chips in a flat layer or a flat porous briquette are used as the wood material (3.2.).

12. The method according to claim 10 or 11, **characterised in that** the purification of smoke from PAHs includes PAHs with a boiling point below the exothermic pyrolysis temperature of the wood.

13. The method according to claim 12, **characterised in that** the purification of smoke from PAHs comprises purification from low boiling compounds selected from the group of: acenaphthylene, benzopyrene, fluorene, anthracene, phenanthrene, fluoranthene, benzo(a)pyrene, dibenz(a,h)anthracene or a mixture thereof.

14. The method according to any one of the preceding claims from 10 to 13, **characterised in that** in step a), the wood material (3.2.) is successively burned on the modules of the heating element (9), which are switched on together or sequentially at set time intervals, implementing the programme of the entire smoking process in smoke generated locally by artificial heating and generated spontaneously during exothermic pyrolysis of wood and possible burning of charcoal resulting in production of CO and CO₂ and their processing in the purification step into acidified water as the final product.

## Patentansprüche

1. Vorrichtung zum Lufträuchern von Lebensmittelprodukten, insbesondere tierischen Ursprungs, umfassend mindestens eine Räucherkammer oder einen Räuchertunnel und ein Heizelement, wobei das am Boden der Kammer angeordnete Heizelement einen modularen Aufbau aufweist und mindestens drei Module umfasst, die in einer horizontalen Anordnung unter dem Räuchergut angeordnet sind, wobei jedes Modul aus einem Heizkörper und einem Behälter für pyrolysiertes Holzmaterial (3.2) besteht und ein Abstand zwischen den Heizkörpern der einzelnen Module besteht, und die Kammer (1) mit einem Raucherzeuger (3) ausgestattet ist, der über dem Heizelement (9) angeordnet ist, und die Kammer (1) mit einer Rauchreinigungsvorrichtung ausgestattet ist, wobei die Reinigungsvorrichtung mindestens einen Wasserdampf-Kühlkondensator (7) darstellt, **dadurch gekennzeichnet, dass** der besagte Kondensator (7) mit einem Abfluss zum Ableiten des Kondensats verbunden ist; wobei eine Haube (14), die direkt oder indirekt an einem Kamin (12) befestigt ist, mit der Kammer (1) verbunden ist, wodurch ein teilweise und vorübergehend offenes Belüftungssystem geschaffen wird; wobei die besagte Vorrichtung ferner einen Rauchgassammler umfasst, der zum Zünder (8) führt, dessen Flamme durch das Propan-Butan bereitgestellt wird, das in der Flasche (18) enthalten ist, welche über das Ventil (6.4.) mit der Kammer (1) verbunden ist, und an welchem Zünder (8) PAK-haltiger Rauch zu CO2 verbrannt wird und, nach Sättigung mit Wasserdampf, an dem Kondensator (7) kondensiert, der durch das Ventil (6.3) verschlossen und an einen Abfluss zum Ableiten von Kondensat angeschlossen ist.

2. Vorrichtung nach Anspruch 1, **dadurch gekennzeichnet, dass** sie einen Zünder (8), ein Manometer (10), mindestens einen Luftfeuchtigkeitsmesser (13), mindestens einen Temperaturmesser (16) oder eine Kombination davon umfasst.

3. Vorrichtung nach Anspruch 1 oder 2, **dadurch gekennzeichnet, dass** die Module des Heizelements (9) kreisförmige Module oder ovale Module sind.

4. Vorrichtung nach einem der vorstehenden Ansprüche 1 bis 3, **dadurch gekennzeichnet, dass** der Kondensator (7) ein Wärmetauscher mit Temperaturregelung im Bereich des Wasserdampftaupunkts ist.

5. Vorrichtung nach einem der vorstehenden Ansprüche 1 bis 4, **dadurch gekennzeichnet, dass** das Heizelement (9) aus vier identischen Modulen besteht.

6. Vorrichtung nach einem der vorstehenden Ansprüche 1 bis 4, **dadurch gekennzeichnet, dass** das Heizelement (9) aus drei Modulen unterschiedlicher Größe besteht.

7. Vorrichtung nach einem der vorstehenden Ansprüche 1 bis 6, **dadurch gekennzeichnet, dass** der Kamin (12) aus einem Sicherheitselement (11) in Form eines mit einer Folie oder Papier verschlossenen Lochs oder in Form eines federbelasteten Sicherheitsventils besteht. (Uwaga rzecznika: uży 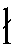 em s 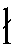 owa "besteht 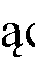 aus" odpowiadajcego angielskiemu "consists of", choć w praktyce patentowej bezpieczniej byloby użyć s 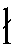 owa "umfasst" (obejmuje/zawiera), aby nie ograniczać komina wy 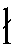 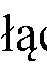 cznie do samego elementu bezpieczeństwa).

8. Vorrichtung nach einem der vorstehenden Ansprüche 1 bis 7, **dadurch gekennzeichnet, dass** der Heizkörper des Moduls des Heizelements (9) eine Heizplatte ist.

9. Vorrichtung nach einem der vorstehenden Ansprüche 1 bis 8, **dadurch gekennzeichnet, dass** das Heizelement (9) durch eine elektrische Stromversorgung (4) mit einem Schalter (5) gespeist und durch eine Mikroprozessorsteuerung gesteuert wird.

10. Verfahren zum Lufträuchern von Lebensmittelprodukten, insbesondere tierischen Ursprungs, in einer Rauchatmosphäre mit zeitlich variierender Konzentration in der Räucherkammer der Vorrichtung nach einem der vorstehenden Ansprüche 1 bis 9, **dadurch gekennzeichnet, dass** die Temperatur des Pyrolyseprozesses 425 °C nicht überschreitet, und die Raucherzeugung die folgenden Schritte umfasst:
(a) Laden einer Charge von Holzmaterial (3.2) in einen Holzmaterialbehälter (3.1), der auf den Modulen des Heizelements (9), das mindestens drei Module umfasst, platziert ist, und erzwungenes Erzeugen von Rauch, während das Holzmaterial (3.2) verbrannt wird;
(b) Ausschalten der durch das Heizelement (9) bereitgestellten Heizung, sobald die natürliche Pyrolysetemperatur des Holzes von etwa 270 °C erreicht ist;
(c) periodisches Leiten des während der Pyrolyse im Temperaturbereich von 260-280 °C und 310-320 °C erzeugten Rauchs durch die Rauchabzugskanäle (19) in einen separaten Kreislauf der Vorrichtung, wo der PAK-haltige Rauch am Zünder (8) zu CO2 verbrannt wird und nach Sättigung mit Wasserdampf am Kondensator (7) kondensiert wird, und das Kondensat im unteren Teil der Kammer (1) gesammelt wird;
(d) während der gereinigte Rauch in die Kammer (1) zurückgeführt oder durch den Kamin (12) nach außen abgeführt wird.

11. Verfahren nach Anspruch 10, **dadurch gekennzeichnet, dass** im Schritt a) Holzspäne in einer flachen Schicht oder ein flaches poröses Brikett als Holzmaterial (3.2) verwendet werden.

12. Verfahren nach Anspruch 10 oder 11, **dadurch gekennzeichnet, dass** die Reinigung des Rauchs von PAK solche PAK umfasst, die einen Siedepunkt unterhalb der exothermen Pyrolysetemperatur des Holzes aufweisen.

13. Verfahren nach Anspruch 12, **dadurch gekennzeichnet, dass** die Reinigung des Rauchs von PAK das Entfernen von niedrigsiedenden Verbindungen umfasst, die aus der Gruppe ausgewählt sind, bestehend aus: Acenaphthylen, Benzopyren, Fluoren, Anthracen, Phenanthren, Fluoranthen, Benzo(a)pyren, Dibenz(a,h)anthracen oder einer Mischung davon.

14. Verfahren nach einem der vorstehenden Ansprüche 10 bis 13, **dadurch gekennzeichnet, dass** im Schritt a) das Holzmaterial (3.2) nacheinander auf den Modulen des Heizelements (9) verbrannt wird, die gemeinsam oder nacheinander in festgelegten Zeitintervallen eingeschaltet werden, wobei das Programm des gesamten Räuchervorgangs in Rauch umgesetzt wird, der lokal durch künstliche Erwärmung und spontan während der exothermen Pyrolyse von Holz sowie bei einer möglichen Verbrennung von Holzkohle erzeugt wird, was zur Bildung von CO und CO2 und deren Verarbeitung im Reinigungsschritt zu angesäuertem Wasser als Endprodukt führt.

## Revendications

1. Dispositif de fumage à l'air de produits alimentaires, notamment d'origine animale, comprenant au moins une chambre de fumage ou un tunnel de fumage et un élément chauffant, dans lequel l'élément chauffant situé au fond de la chambre a une structure modulaire et comprend au moins trois modules disposés selon un agencement horizontal sous les produits fumés, dans lequel chaque module est constitué d'un dispositif de chauffage et d'un récipient pour matériau bois pyrolisé (3.2), et il existe une distance entre les dispositifs de chauffage des modules individuels, et la chambre (1) est équipée d'un générateur de fumée (3) situé au-dessus de l'élément chauffant (9), et la chambre (1) est équipée d'un dispositif de purification de fumée, dans lequel le dispositif de purification constitue au moins un condenseur de vapeur d'eau de refroidissement (7), **caractérisé en ce que** ledit condenseur (7) est relié à un drain pour l'évacuation du condensat ; dans lequel une hotte (14) fixée directement ou indirectement à une cheminée (12) est reliée à la chambre (1) créant un système de ventilation partiellement et temporairement ouvert ; ledit dispositif comprend en outre un collecteur d'échappement de fumée menant à l'allumeur (8), dont la flamme est fournie par le propane-butane contenu dans la bouteille (18) reliée à la chambre (1) par la vanne (6.4.), et sur lequel allumeur (8) la fumée contenant des HAP est brûlée en CO2 et, après saturation avec de la vapeur d'eau, est condensée sur le condenseur (7) fermé par la vanne (6.3) et relié à un drain pour l'évacuation du condensat.

2. Dispositif selon la revendication 1, **caractérisé en ce qu'il** comprend un allumeur (8), un manomètre (10), au moins un hygromètre (13), au moins un thermomètre (16), ou une combinaison de ceux-ci.

3. Dispositif selon la revendication 1 ou 2, **caractérisé en ce que** les modules de l'élément chauffant (9) sont des modules circulaires ou des modules ovales.

4. Dispositif selon l'une quelconque des revendications précédentes 1 à 3, **caractérisé en ce que** le condenseur (7) est un échangeur de chaleur avec régulation de température dans la plage du point de rosée de la vapeur d'eau.

5. Dispositif selon l'une quelconque des revendications précédentes 1 à 4, **caractérisé en ce que** l'élément chauffant (9) est constitué de quatre modules identiques.

6. Dispositif selon l'une quelconque des revendications précédentes 1 à 4, **caractérisé en ce que** l'élément chauffant (9) est constitué de trois modules de tailles différentes.

7. Dispositif selon l'une quelconque des revendications précédentes 1 à 6, **caractérisé en ce que** la cheminée (12) est constituée d'un élément de sécurité (11) sous la forme d'un trou bouché par un film ou du papier, ou sous la forme d'une soupape de sécurité à ressort.

8. Dispositif selon l'une quelconque des revendications précédentes 1 à 7, **caractérisé en ce que** le dispositif de chauffage du module de l'élément chauffant (9) est une plaque chauffante.

9. Dispositif selon l'une quelconque des revendications précédentes 1 à 8, **caractérisé en ce que** l'élément chauffant (9) est alimenté par une alimentation électrique (4) avec un interrupteur (5) et contrôlé par un contrôleur à microprocesseur.

10. Procédé de fumage à l'air de produits alimentaires, notamment d'origine animale, dans une atmosphère de fumée avec une concentration variable dans le temps dans la chambre de fumage du dispositif selon l'une quelconque des revendications précédentes 1 à 9, **caractérisé en ce que** la température du processus de pyrolyse ne dépasse pas 425°C, et la production de fumée comprend les étapes suivantes :
(a) charger un lot de matériau bois (3.2.) dans un récipient pour matériau bois (3.1.) placé sur les modules de l'élément chauffant (9) comprenant au moins trois modules et générer de manière forcée de la fumée pendant que le matériau bois (3.2.) est brûlé ;
(b) éteindre le chauffage fourni par l'élément chauffant (9) une fois que la température de pyrolyse naturelle du bois d'environ 270°C a été atteinte ;
(c) diriger périodiquement, à travers les canaux d'échappement de fumée (19), la fumée générée pendant la pyrolyse dans la plage de température de 260-280°C et 310-320°C vers un circuit séparé du dispositif, où la fumée contenant des HAP est brûlée sur l'allumeur (8) en CO2 et après saturation avec de la vapeur d'eau est condensée sur le condenseur (7), et le condensat est collecté dans la partie inférieure de la chambre (1) ;
(d) tandis que la fumée purifiée est renvoyée dans la chambre (1) ou évacuée à l'extérieur par la cheminée (12).

11. Procédé selon la revendication 10, **caractérisé en ce qu'à l**'étape a), des copeaux de bois en couche plate ou une briquette poreuse plate sont utilisés comme matériau bois (3.2.).

12. Procédé selon la revendication 10 ou 11, **caractérisé en ce que** la purification de la fumée des HAP comprend les HAP ayant un point d'ébullition inférieur à la température de pyrolyse exothermique du bois.

13. Procédé selon la revendication 12, **caractérisé en ce que** la purification de la fumée des HAP comprend la purification des composés à bas point d'ébullition choisis dans le groupe composé de : acénaphthylène, benzopyrène, fluorène, anthracène, phénanthrène, fluoranthène, benzo(a)pyrène, dibenz(a,h)anthracène ou un mélange de ceux-ci.

14. Procédé selon l'une quelconque des revendications précédentes 10 à 13, **caractérisé en ce qu'à** l'étape a), le matériau bois (3.2.) est brûlé successivement sur les modules de l'élément chauffant (9), qui sont allumés ensemble ou séquentiellement à des intervalles de temps définis, mettant en œuvre le programme de l'ensemble du processus de fumage dans de la fumée générée localement par chauffage artificiel et générée spontanément pendant la pyrolyse exothermique du bois et le brûlage éventuel du charbon de bois entraînant la production de CO et de CO2 et leur traitement dans l'étape de purification en eau acidifiée comme produit final.
